# EUROPÄISCHE PATENTSCHRIFT

(11) **EP 0 723 506 B1**
(45) Veröffentlichungstag und Bekanntmachung des Hinweises auf die Patenterteilung: **11.06.1997**
(21) Anmeldenummer: 94928868.2
(22) Anmeldetag: 06.10.1994
(51) Int. Cl.: B60R 9/04

(54) **DACHRELING FÜR FAHRZEUGE**
RAILS FOR CAR ROOFS
GLLISSIERES DE PORTE-BAGAGES MONTE SUR UN TOIT DE VEHICULE

(30) Priorität: 18.10.1993 DE 9315848 U; 10.05.1994 DE 9407765 U
(43) Veröffentlichungstag der Anmeldung: 31.07.1996
(73) Patentinhaber: Erbslöh Aktiengesellschaft, 42553 Velbert (DE)
(72) Erfinder: BLOMBERG, Harald, D-42349 Wuppertal (DE); PÖTER, Olaf, D-42115 Wuppertal (DE); SCHOLL, Alfred, D-45468 Mühlheim (DE)
(74) Vertreter: Ernicke, Hans-Dieter, Dipl.-Ing.
(86) Internationale Anmeldenummer: EP9403303
(87) Internationale Veröffentlichungsnummer: WO9511144

(56) Entgegenhaltungen:
- EP-A- 0 580 023
- DE-A- 3 230 346
- DE-U- 9 111 655

## Beschreibung

Die Erfindung betrifft eine Dachreling für Fahrzeuge mit den Merkmalen im Oberbegriff des Hauptanspruches.

Bei bekannten Dachrelings gemäß der DE-OS 40 04 829 oder DE-OS 40 28 433 sind der Holm und die beiden endseitigen Füße als Einzelteile ausgebildet. Der Holm besteht aus einem Hohlkammerprofil, während die beiden Füße als Schmiede- oder Gußteile ausgeführt sind. Die Füße sind mit dem Fahrzeugdach direkt oder über Adapter verschraubbar. Die bekannten Anordnungen haben den Nachteil, daß die Verbindungsstellen zwischen Holm und Füßen Toleranzprobleme aufwerfen, wobei auch eventuell entstehende Spalte wegen der Optik unerwünscht sind. Die Verbindungsstellen sind auch trotz formschlüssiger Zapfenführung zwischen Fuß und Holm nur begrenzt belastbar.

Es ist Aufgabe der vorliegenden Erfindung, eine besser geeignete Bauform für eine Dachreling aufzuzeigen.

Die Erfindung löst diese Aufgabe mit den kennzeichnenden Merkmalen des Hauptanspruches.

Der Oberbegriff des Hauptanspruches geht von der älteren, aber nicht vorveröffentlichten EP-A 0 580 023 aus, wonach eine einteilige Dachreling , bestehend aus einem Hohlkammerprofil aus Leichtmetall mit abgebogenen Füßen, bekannt ist.

Die erfindungsgemäße Dachreling ist ebenfalls mit dem Holm und den beiden Füßen einteilig ausgebildet und besteht durchgehend aus einem Holhkammerprofil, das jedoch durch eine geeignete Verformung die erforderliche Gestalt und auch Festigkeit erhält. Die Verformung ist dabei im Fuß- und Holmbereich unterschiedlich.

Der Fuß wird wie bei der EP-A 0 580 023 von einem abwärts gerichteten Biegeabschnitt des Hohlkammerprofils gebildet, welcher endseitig schräg abgeschnitten ist. Hierdurch erhält der Fuß eine vergrößerte Aufstandsfläche und zudem einen nach unten offenen Hohlraum, in den ein Stützteil eingesteckt werden kann. Das Stützteil kann direkt oder mittelbar über einen Adapter die Verbindung zum Fahrzeugdach herstellen. Es ist dazu formschlüssig im Hohlraum des Fußes geführt. Bei einer erfindungsgemäßen Formgebung mit einem spitz zulaufenden Schnabel, der in eine Verengung am Übergang des Fußes in den Holm greift, läßt sich ein Spannschluß herstellen, der die Dachreling besonders gut fixiert und auch Toleranzen aufnehmen kann. Über einen geeigneten Keilwinkel kann der zulässige Toleranzspielraum noch vergrößert werden.

Die Verformung des Hohlprofils besteht außer der Biegung im Fußbereich noch in einer zum Innenraum gerichteten Bodenwölbung, die zudem über die Profillänge unterschiedlich stark sein kann. Diese Verformung befindet sich an der Profilunterseite und ist von außen an der montierten Dachreling nicht oder kaum sichtbar. Sie läßt die im Sichtbereich liegenden äußeren Oberflächen der Dachreling unbeeinflußt, so daß hier keine Strukturänderungen auftreten und keine Nacharbeiten erforderlich sind. Über die Bodenwölbung läßt sich auf einfache Weise die Verengung des Hohlraums am Übergang vom Fuß zum Holm bilden. Außerdem wird die Holmbreite durch Verkürzung der Seitenwände auf das gewünschte Maß eingestellt. Die Bodenwölbung bietet ferner eine günstige und fast unsichtbare Befestigungsmöglichkeit für Mittelfüße. Alternativ können die Mittelfüße auch einstückig mit dem Holm ausgebildet werden, indem man in diesem Profilbereich keine Bodenwölbung vorsieht.

Die erfindungsgemäße Dachreling läßt sich einfach und kostengünstig herstellen. Die Toleranzprobleme sind gegenüber dem Stand der Technik deutlich verringert. Außerdem hat die erfindungsgemäße Dachreling durch die Einstückigkeit eine einheitliche Werkstoffbeschaffenheit und ein einheitliches Aussehen. Sie läßt sich auch leichter und besser einer Oberflächenbehandlung unterziehen. Während beim eingangs erwähnten Stand der Technik unterschiedliche Materialien für Holm und Füße verwendet werden, was häufig zu Farbabweichungen, unterschiedlichen Oberflächenstrukturen und anderen optisch ungünstigen Erscheinungsformen führt, treten bei der erfindungsgemäßen einteiligen Dachreling diese Probleme nicht auf.

In den Unteransprüchen 2 bis 12 sind weitere vorteilhafte Ausgestaltungen der Erfindung angegeben.

Die Erfindung befaßt sich außerdem mit dem Problem, eine Dachreling der vorstehend genannten Art oder eine andere, beispielsweise nach dem Stand der Technik ausgebildete Dachreling in einfacher Weise montieren zu können, ohne hierzu eine Fachwerkstätte aufsuchen zu müssen.

Diesem zusätzlichen Problem liegt die Aufgabe zugrunde, eine Vorrichtung zur lösbaren Befestigung der Reling auf der Fahrzeugoberfläche zu entwickeln, die eine Montage bzw. Demontage von der Außenseite des Fahrzeuges her ermöglicht, leicht durchführbar ist und dennoch einen sicheren Halt der Dachreling am Fahrzeug ohne Erkennbarkeit der Befestigungsmittel ermöglicht.

Die Erfindung geht davon aus, daß der Verbindungsbolzen an der Fahrzeugoberfläche, insbesondere an der Dachfläche, herstellungsseitig vormontiert ist und demgemäß über die Oberfläche hinausragt. Die Dachreling, die regelmäßig von Zubehör-Lieferanten der Fahrzeughersteller produziert und montagefertig geliefert wird, braucht dann lediglich von oben her auf die Verbindungsbolzen aufgesetzt werden, wobei die Arretierung der Aufnahme auf dem konischen Verbindungsbolzen zweckmäßigerweise selbsttätig erfolgt.

Es ist allerdings durch die DE-U 91 11 655.4 bekannt, einen Verbindungsbolzen in napfförmigen Blechvertiefungen eines Dachrahmens festzuschrauben. Der über das Dach ragende Bolzenteil weist eine kegelförmige Verjüngung auf, deren Zweck nicht beschrieben wird. Ein symbolisch dargestellter Relingholm wird über eine Wurmschraube mit dem Bolzen verbunden. Dadurch wird aber nicht der Vorteil der erfindungsgemäßen Vorrichtung erreicht.

Weitere Merkmale ergeben sich aus den Unteransprüchen 13 bis 15.

Die Erfindung ist in den Zeichnungen beispielsweise und schematisch dargestellt. Im einzelnen zeigen:
- Figur 1:: ein Fahrzeugdach mit zwei Dachrelings in schematischer und perspektivischer Darstellung,
- Figur 2:: einen abgebrochenen Längsschnitt durch den Fußbereich und den Holmübergang der Dachreling,
- Fig. 3 u. 4:: Seitenansicht der Dachreling in zwei Verformungsstufen,
- Figur 5:: einen Querschnitt durch die Dachreling und eine Mittelstütze,
- Figur 6:: eine Seitenansicht einer Alternative des Stützteiles im Fußbereich mit der Befestigung der Dachreling,
- Figur 7:: einen Vertikalschnitt durch den Fußbereich mit einer Variante zur Toleranzaufnahme,
- Figur 8:: eine Seitenansicht eines abgebogenen Relingfußes mit einer anderen Variante seiner Befestigungsvorrichtung,
- Figur 9:: einen Vertikalschnitt durch einen Relingfuß mit von der Vertikalen abweichender Schräglage und
- Figur 10:: einen Schnitt durch einen hohlen Gewindebolzen gemäß Figur 8 in vergrößerter Darstellung.

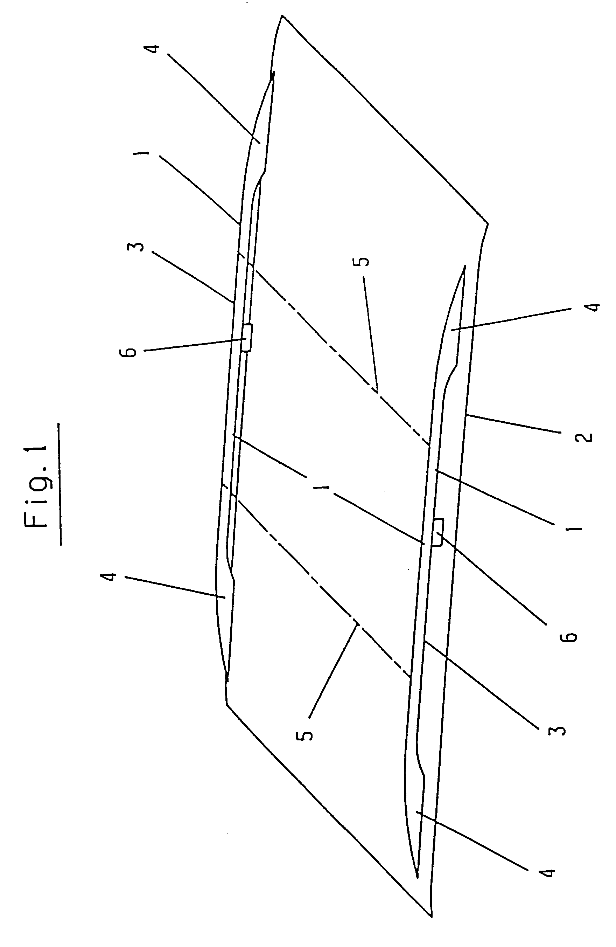

Figur 1 zeigt in perspektivischer Darstellung ein Fahrzeugdach (2) eines Pkw, auf dem beidseits eine Dachreling (1) montiert ist. Die Dachreling (1) besteht jeweils aus einem längslaufenden Holm (3), der an beiden Enden einstückig in einen angeformten Fuß (4) übergeht, mit dem die Dachreling (1) am Fahrzeugdach (2) befestigt ist. Im Mittelbereich der Dachreling (1) können ein oder mehrere Mittelstützen (6) vorgesehen sein. Zwischen die beiden Dachrelings (1) lassen sich Querträger (5) für Gepäckaufbauten, Fahrradständer etc. einbauen. Hierzu haben die Holme (3) geeignete Aufnahmen, die nicht näher dargestellt sind.

Die Dachreling (1) ist für beliebige Fahrzeuge geeignet, zum Beispiel auch für Schiffe oder dergleichen. Sie läßt sich auch ortsfest montieren und ist zudem für andere Zwecke geeignet, zum Beispiel als Handlauf.

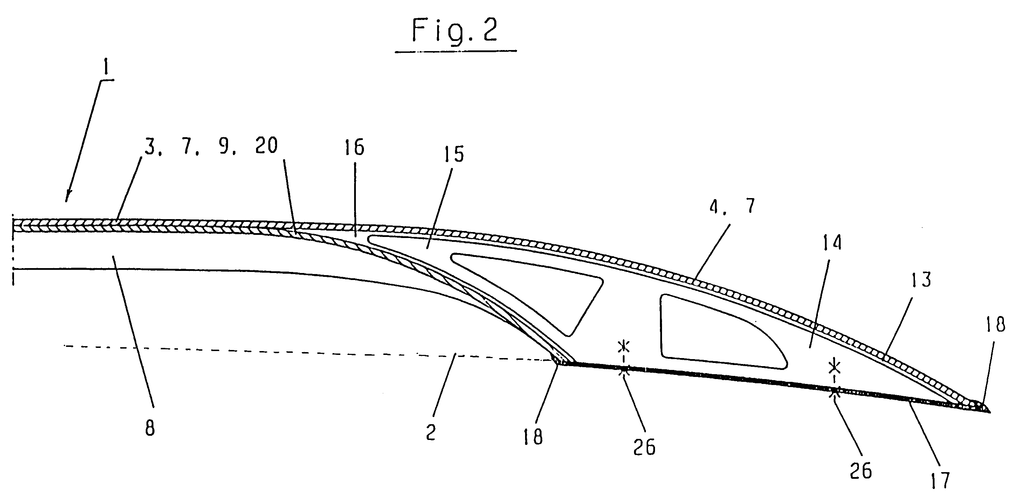

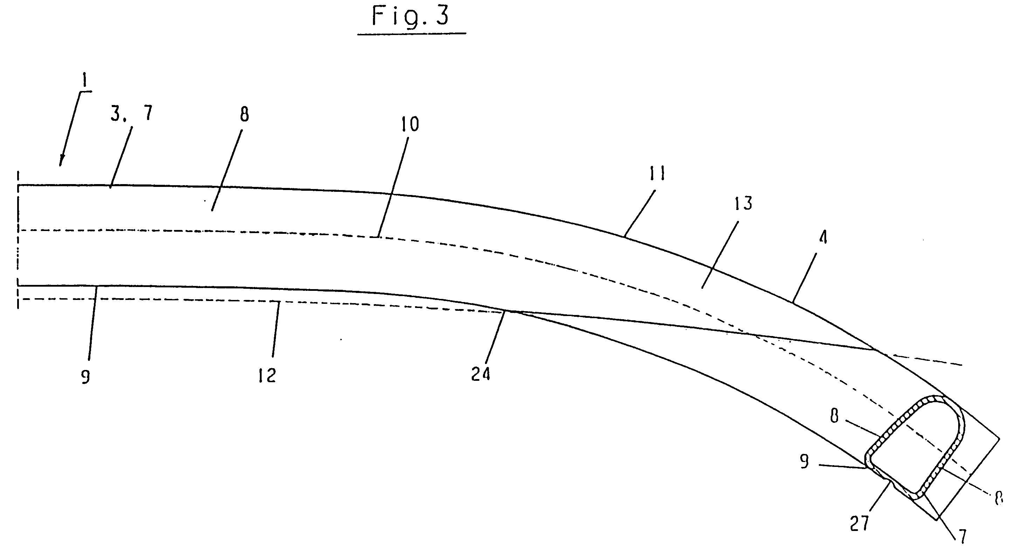

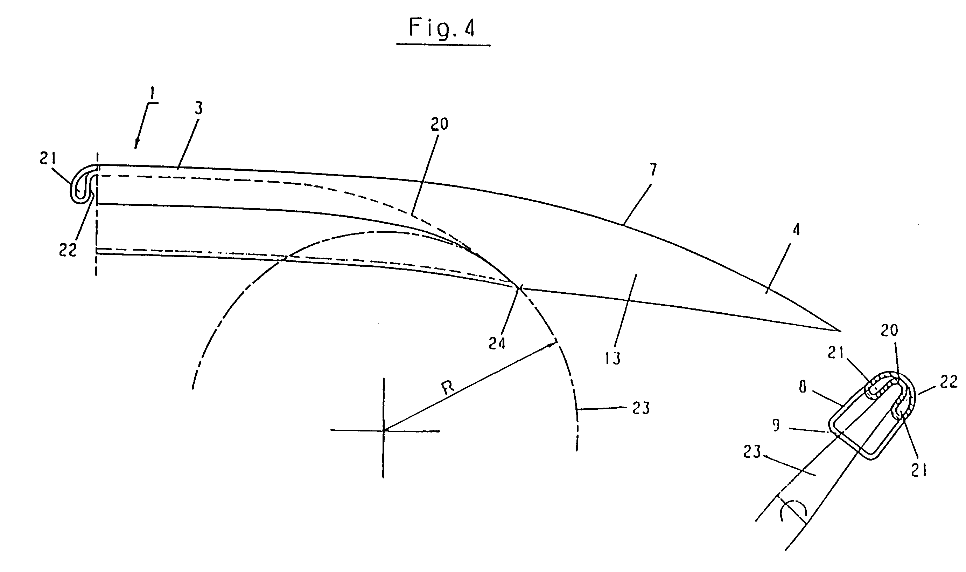

Figur 2 zeigt in abgebrochener und längsgeschnittener Darstellung die Verbindung der Dachreling (1) mit dem Fahrzeugdach (2). Die Dachreling (1) besteht aus einem verformten Hohlkammerprofil (7). Im bevorzugten Ausführungsbeispiel hat das Hohlkammerprofil (7) nur einen Hohlraum und weist zumindest in der in Figur 3 und 4 näher beschriebenen Ausgangsform einen im wesentlichen teilovalen rohrförmigen Querschnitt auf.

Das Hohlkammerprofil (7) besteht aus Leichtmetall, vorzugsweise aus Aluminium oder Aluminiumlegierung. Es ist als Strangpreßprofil ausgebildet, kann aber auch als gezogenes oder anderweitig hergestelltes Profil gestaltet sein. In Abwandlung der gezeigten Ausführungsform kann das Hohlkammerprofil auch mehrere innenliegende Hohlräume, Verrippungen, außenseitige Flansche oder eine andere geeignete Formgebung besitzen.

Figur 3 und 4 verdeutlichen den Werdegang und die Verformungsschritte zur Herstellung der in Figur 2 gezeigten Endform.
Das Hohlkammerprofil (7) wird gemäß Figur 3 zur Herstellung des Fußes (4) zunächst endseitig in einem sanften Bogen schräg nach unten verformt. Dieser Biegeabschnitt (11) wird dann am Ende schräg zur gekrümmten Profillängsachse (10) an der Unterseite abgeschnitten oder auf andere Weise aufgetrennt. Die Schnittlinie trägt die Bezugsziffer (12). Mit dem schrägen Schnitt wird der Boden (9) des Hohlkammerprofils (7) entfernt. Es entsteht im Fuß (4) ein Hohlraum (13) mit einer großen Zugangsöffnung. Der Boden (9) des Hohlkammerprofils (7) endet an einer Fußkante (24).

In einein weiteren Verformungsschritt gemäß Figur 4 erhält das Hohlkammerprofil (7) eine Bodenwölbung (20). Beginnend an der Fußkante (24) wird der Boden (9) mit einem geeigneten Biegewerkzeug (23) zentral von unten eingedrückt oder eingerollt und verformt sich dabei Omega-förmig. Die Bodenwölbung (20) ist zum Innenraum des Hohlkammerprofils (7) gerichtet. Sie beginnt an der innenliegenden Fußkante (24) und steigt im Bereich des Fußes (4) bis zum Übergang in den geraden Holm (3) an. Hierdurch erhält der Hohlraum (13) eine in Figur 2 gezeigte schnabelförmige Verengung (16). Im Holmbereich liegt der hochgewölbte Boden (9) am Dach des Hohlkammerprofils (7) an oder ist relativ eng benachbart.

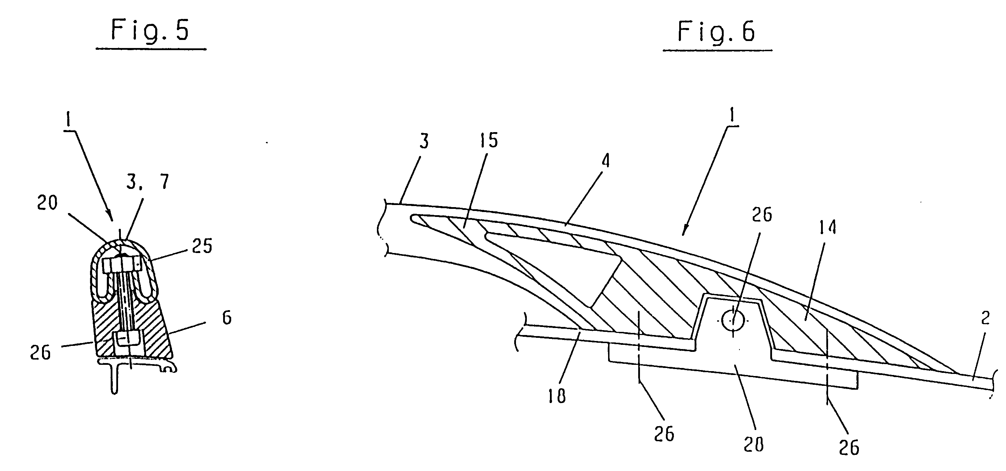

Wie die Querschnittsdarstellung im rechten Teil der Figuren 3 und 4 verdeutlicht, hat der Boden (9) in der Mitte eine Schwachstelle (27), die die Verformung erleichtert. Beim Hochdrücken und Einwölben des Bodens (9) werden die Seitenwände (8) des Hohlkammerprofils (7) verkürzt und haben beispielsweise am Holm (3) etwa noch die halbe Breite. Dabei werden beidseits der Bodenwölbung (20) Wandschlaufen (21) gebildet. Zwischen den stehengebliebenen Seitenwänden (8) und der Innenwand (22) der Bodenwölbung (20) verbleibt ein gewisser Hohlraum. Dieser läßt aus den nachstehend zu Figur 5 erläuterten Gründen gewisse Verformungen der Innenwände (22) zu.

Über die Bodenwölbung (20) wird eine Verschmälerung des Holms (3) gegenüber dem Fuß (4) geschaffen. Zudem entsteht der gewünschte Abstand zwischen der Unterseite des Holms (3) und dem Fahrzeugdach (2). Die Bodenwölbung (21) versteift auch die Dachreling (1).

Wie Figur 4 verdeutlicht, hat das Biegewerkzeug (23) im Querschnitt eine symmetrische Keilform mit abgerundeter Spitze. Es kann als stehende kreisrunde Scheibe ausgebildet sein, die gegen das Hohlkammerprofil (7) bewegt wird. Zweckmäßiger wird die Verformung allerdings mit einem ein- oder zweistufigen Prägewerkzeug, beispielsweise einem Stülpstempel, erzeugt. Im geraden Holmbereich ist die Verformung maximal und gleichbleibend.

Im bevorzugten Ausführungsbeispiel wird gemäß Figur 3 das Hohlkammerprofil (7) zunächst gebogen (11). Anschließend wird die Bodenwölbung (20) gemäß Figur 4 eingedrückt und dann erst das Hohlkammerprofil (7) längs abgeschnitten (12). Der Schnitt kann aber auch vor der Bodenwölbung geschehen.

Zur Befestigung der Dachreling (1) wird in den hohlen Fußraum (13) ein Stützteil (14) eingeführt. Dieses ist der Innenform des Hohlraums (13) angepaßt und darin formschlüssig geführt. Es liegt vorzugsweise vollflächig an den Innenwänden des Fußes (4) an oder ist zumindest eng benachbart. Das Stützteil (14) besitzt am vorderen Ende einen spitz zulaufenden Schnabel (15), der in die Verengung (16) greift. Bei der Befestigung des Stützteils (14) auf dem Fahrzeugdach (2) kann sich der Schnabel (15) in der Verengung (16) verspannen und den Fuß (4) durch Formschluß nach allen Richtungen fixieren.

Das Stützteil (14) weist eine Bodenplatte (17) auf, mit der es auf dem Fahrzeugdach (2) aufliegt und mittels spannbarer Verbindungselemente (26), vorzugsweise in Form von unten her eingeführten Schrauben, befestigt wird. Gegebenenfalls können Gummiplatten oder andere Dichtelemente dabei eingespannt werden. Die Gummiunterlage kann z.B. einen Rand (18) aufweisen, der außenseitig den Fuß (4) umgreift und abdichtet.

Figur 6 zeigt eine Variante, bei der das Stützteil (14) am Fuß (4) zusätzlich durch ein eingesetztes und spannbares Verbindungselement (26), zum Beispiel eine quergerichtete Schraube, einen Niet oder dgl. befestigt ist. Außerdem kann das Stützteil (14) unter Zwischenlage eines Adapters (28) am Fahrzeugdach (2) befestigt sein. Der Adapter (28) kann ebenfalls mit dein Verbindungselement (26) verbunden sein und beispielsweise über eine Keilführung am Stützteil (14) angreifen. Hierbei kann eine gewisse Relativbeweglichkeit gegeben sein, um Toleranzen bei der Befestigung auszugleichen.

Figur 5 verdeutlicht die Ausbildung und Befestigung der eingangs erwähnten Mittelstützen (6). In die von der Bodenwölbung (20) gebildete Nut ist eine Hammerkopfplatte (25) eingeführt. Diese hat vorzugsweise eine rechteckige oder ovale Form. Sie läßt sich dadurch mit den Schmalseiten von unten her in die Bodenwölbung (20) einführen und anschließend drehen. Durch die Drehung wird die längliche Hammerkopfplatte (25) quergestellt und verformt dabei die Innenwände (22) der Wandschlaufen (21). Die Hammerkopfplatte (25) ist dadurch formschlüssig im Holm (3) beziehungsweise dem Hohlkammerprofil (7) fixiert.

Die Mittelstützen (6) sind der verformten Gestalt der Hohlkammerprofile (7) beziehungsweise der Form der Holme (3) angepaßt und umgreifen diese zumindest teilweise mit Formschluß. Innenseitig befindet sich ein Verbindungselement (26), das mit der Hammerkopfplatte (25) in Verbindung steht. Vorzugsweise handelt es sich um eine Schraube, die von unten durch die Mittelstütze (6) in ein entsprechendes Muttergewinde an der Hammerkopfplatte (25) eingedreht wird. Die Mittelstütze (6) ist ihrerseits in geeigneter Weise auf dem Fahrzeugdach (2), zum Beispiel auf einer Dachleiste oder dergleichen befestigt.

Alternativ kann man die Mittelstützen (6) auch einteilig an der Dachreling anformen. Dazu wird in diesem Holmbereich auf die Bodenwölbung (20) verzichtet. Das Hohlkammerprofil (7) bleibt in seiner Ausdehnung bestehen und reicht bis zum Fahrzeugdach (2). Beidseits der Mittelstütze (6) schließen sich die Bodenwölbungen (20) dann wieder an.

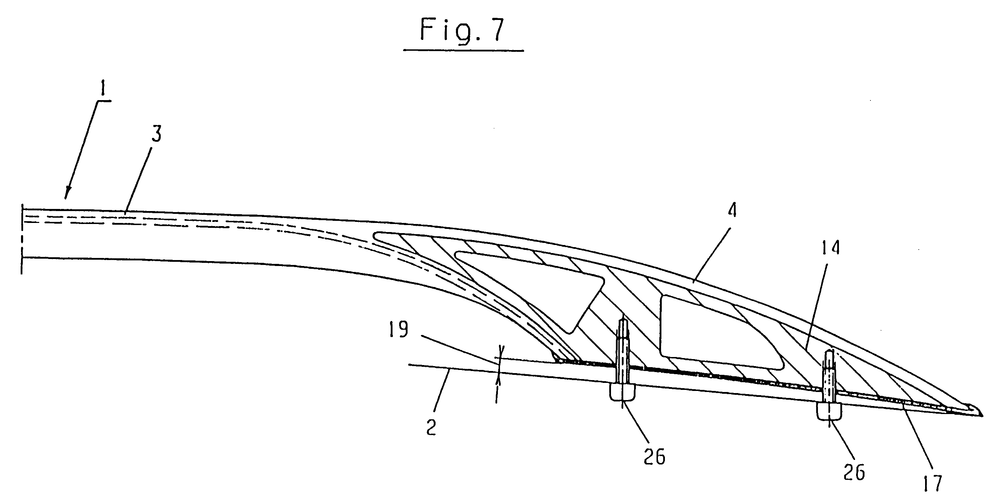

Figur 7 zeigt eine spannbare Befestigungsmöglichkeit für das Stützteil (14) und die Dachreling (1). Die Bodenplatte (17) des eingesetzten Stützteils (14) steht in einem Keilwinkel (19) von vorzugsweise ca. 1 - 3 ° schräg zum Fahrzeugdach (2). Beim Anziehen der Verbindungselemente (26) wird das Stützteil (14) plan an das Fahrzeugdach (2) gelegt und um den Keilwinkel (19) mit dem Schnabel (15) nach unten gedreht. Dadurch spannt der Schnabel (15) die Verengung (16) und preßt den Fuß (4) fest auf das Fahrzeugdach (2). Um den Keilwinkel (19) kann auch die Schnittlinie (12) des Hohlkammerprofils (7) schräg zur Horizontalen bzw. zum Fahrzeugdach (2) verlaufen.

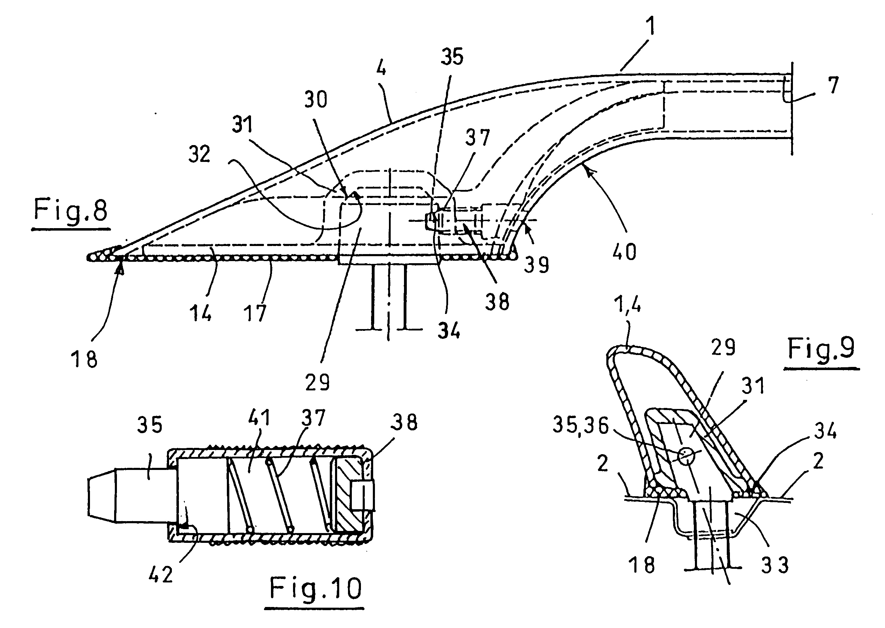

Im Beispiel der Figur 8 ist eine Dachreling (1) an ihrem einen abgebogenen Ende (4) dargestellt, wobei das abgebogene Ende (4) zugleich der Relingfuß ist.

In das abgebogene Ende (4) der Reling (1) greift ein vornehmlich als Gußteil ausgebildeter Beschlag (14), welcher der Innenform des Relingfußes (4) angepaßt ist und bei (34) zweckmäßigerweise mit dem Relingfuß (4) verschweißt wird.

Der Beschlag (14) weist eine Aufnahme (31) mit einer konischen Bohrung (32) auf, in welche ein Verbindungsbolzen (29) eingreift, der mit der Dachoberfläche (2) verbunden ist und über diese Oberfläche (2) hinausragt. Diese Verbindungsbolzen (29) sind seitens der Fahrzeughersteller vormontiert. Der Verbindungsbolzen (29) weist mindestens an seinem freien Stirnende eine konische Abschrägung (30) auf, die mit der konischen Bohrung (32) der Aufnahme (31) zusammenwirkt. Man braucht daher zum Befestigen der Reling (1) auf der Fahrzeugoberfläche 82) lediglich die Reling (1) mit ihren Aufnahmen (31) auf die vorstehenden Verbindungsbolzen (29) aufzudrücken.

Um eine Lagesicherung der Reling (1) auf den Verbindungsbolzen (29) zu erreichen, wird ein Arretiergesperre verwendet. Im Ausführungsbeispiel der Figur 8 befindet sich an der Mantelfläche des Verbindungsbolzens (29) eine konische Sackbohrung (36), in welche ein konisches Ende eines Arretierstiftes (35) radial zum Verbindungsbolzen (29) eingreift. Wenn dieser Arretierstift (35) längs seiner Achse federnd geführt ist, entsteht die Arretierung der Aufnahme (31) auf dem Gewindebolzen (29) automatisch während des Aufdrückens der Reling (1). Man kann aber auch den Arretierstift (35) längs seiner Achse verstellbar ausbilden und die Blockierung der Arretierstellung auf mechanische Weise vornehmen.

Im Ausführungsbeispiel der Figur 8 ist hierzu vorgesehen, daß ein Gewindestift (38) in der Aufnahme (31) radial zum Verbindungsbolzen (29) in einer Gewindebohrung verdrehbar ist. Zweckmäßigerweise befindet sich zwischen dem Gewindestift (38) und dem Arretierstift (35) eine Feder (37). Mit Hilfe des Gewindestiftes (38) läßt sich der Arretierstift (35) in seiner eingerasteten Stellung blockieren bzw. abstützen.

Wenn man die Reling (1) von der Dachoberfläche (2) lösen will, braucht man lediglich den Gewindestift (38) zurückzudrehen, so daß der Arretierstift (35) aus der Sackbohrung (36) gelöst werden kann. Dann wird die Reling (1) nach oben abgehoben.

Um die Betätigung des Gewindestiftes (38) bzw. des Arretierstiftes (35) von außen her nicht erkennbar zu machen, befindet sich in der Wandung des abgebogenen Relingfußes (4) eine verhältnismäßig kleine Bohrung (39), durch welche ein Spezialwerkzeug geführt werden kann, welches mit einer passenden Werkzeugfläche des Gewindestiftes (38) zusammenwirkt.

Wenn die Reling (1) gemäß Figur 4 ausgebildet ist, dann entsteht anstelle der kleinen Bohrung (39) ein schmaler Spalt zwischen den Wandungen des Hohlprofiles (7), durch den das Werkzeug geführt werden kann.

Im Beispiel der Figur 9 ist gezeigt, daß der Verbindungsbolzen (29) eine von der Vertikalen abweichende Schrägstellung aufweisen kann, wobei die Aufnahme (31) und gegebenenfalls auch das abgebogene Ende (4) (Relingfuß) der Reling (1) eine ungefähr parallele Schrägstellung ebenfalls aufweisen.

Man erkennt aus Figur 9 weiterhin, daß die Oberfläche (2) des Fahrzeuges eine Dachrinne (33) bildet, in welcher der Fuß des Verbindungsbolzens (29) sich befindet und innenseitig in nicht dargestellter Weise befestigt ist. Außerdem ist die abgeschrägte Fläche des Relingfußes (4) durch eine elastische Bodenplatte (17) abgedeckt, die beim Aufsetzen der Reling (1) auf die Fahrzeugoberfläche (2) deren Beschädigung verhindern soll.

Die Ausbildung des Arretierstiftes (35) und des Gewindestiftes (38) kann in mannigfacher Weise variiert werden. So kann beispielsweise der Arretierstift (35) im Gewindebolzen (38) geführt sein, wie dies in Figur 10 dargestellt ist. Die Bohrung (41) zur Aufnahme des Arretierstiftes (35) ist mit einer Anschlagstufe (42) zu versehen, um das Entweichen des Arretierstiftes (35) aus der Bohrung (41) beim Lösen der Reling (1) zu verhindern. Der Gewindestift (38) ist in einer Gewindebohrung der Aufnahme (31) radial zum Verbindungsbolzen verdrehbar. Beim Rückdrehen des Gewindestiftes (38) wird der Arretierstift (35) aus der Sackbohrung (36) des Verbindungsbolzens (29) gelöst.

Die Erfindung beschränkt sich nicht auf die in der Zeichnung schematisch dargestellten Lösungen.

Der Vorteil der Erfindung besteht darin, daß die Dachreling (1) ohne Werkzeug am Montageband der Fahrzeugfabrik montiert werden kann. Es entstehen bei der Montage keine Lackschäden. Außerdem ist die Befestigung nicht sichtbar. Dennoch ist die Demontage der Reling (1) ohne Beschädigung des Fahrzeuges jederzeit möglich, ohne daß eine Werkstatt hierzu aufgesucht werden muß.

Die Erfindung zeichnet sich schließlich dadurch aus, daß die Reling (1) an der Fahrzeugoberfläche ohne Spiel befestigt werden kann, weil der Verbindungsbolzen (29) und die Aufnahme (31) passend zueinander abgeschrägt sind. Daraus ergibt sich, daß unter Aufnahme der Last auf der Reling (1) ein Setzeffekt entsteht, welcher die spiellose Verbindung der Reling verstärkt.

### BEZUGSZEICHENLISTE

- 1: Dachreling
- 2: Fahrzeugdach
- 3: Holm
- 4: Fuß
- 5: Querträger
- 6: Mittelstütze
- 7: Hohlkammerprofil
- 8: Seitenwand
- 9: Boden
- 10: Längsachse
- 11: Biegeabschnitt
- 12: Schnittlinie
- 13: Hohlraum, hohler Fußraum
- 14: Stützteil
- 15: Schnabel
- 16: Verengung
- 17: Bodenplatte
- 18: Rand
- 19: Keilwinkel
- 20: Bodenwölbung, Eindrückung
- 21: Wandschlaufe
- 22: Innenwand
- 23: Biegewerkzeug
- 24: Fußkante
- 25: Hammerkopfplatte
- 26: Verbindungselement, Schraube
- 27: Wandschwächung
- 28: Adapter
- 29: Verbindungsbolzen
- 30: konische Abschrägung
- 31: Aufnahme
- 32: konische Bohrung
- 33: Dachrinne
- 34: Schweißverbindung
- 35: Arretierstift
- 36: Sackbohrung
- 37: Feder
- 38: Gewindestift
- 39: Bohrung, Schlitz
- 40: hohlkehlenförmige Innenseite des Relingfußes
- 41: Bohrung
- 42: Anschlagstufe

## Patentansprüche

1. Dachreling für Fahrzeuge, bestehend aus einem als Hohlkammerprofil (7) ausgebildeten Holm (3) mit einteilig sich daran anschließenden endseitig abgewinkelten Füßen, die mit dem Fahrzeugdach verbindbar sind, bei dem der einzelne Fuß (4) von einem Biegeabschnitt (11) des Holmes (3) gebildet ist, welcher einseitig schräg abgeschnitten ist, und einen nach unten offenen Hohlraum (13) aufweist, in dem ein Stützteil (14) steckt, das dem Hohlraum (13) angepaßt ist, dadurch **gekennzeichnet**,
daß das Hohlkammerprofil (7) an der Unterseite seines Querschnittes eine längslaufende, zum Innenraum gerichtete Bodenwölbung (20) aufweist.

2. Dachreling nach Anspruch 1, dadurch **gekennzeichnet**, daß die Bodenwölbung (20) an der innenliegenden Fußkante (24) beginnt sowie im Bereich des Fußes (4) bis zum Übergang in den geraden Holm (3) ansteigt und die Verengung (16) bildet.

3. Dachreling nach Anspruch 1 oder 2, dadurch **gekennzeichnet**, daß das Hohlkammerprofil (7) im Bereich der Bodenwölbung (20) verkürzte Seitenwände (8) aufweist.

4. Dachreling nach einem der Ansprüche 1 bis 3, dadurch **gekennzeichnet**, daß die Bodenwölbung (20) und die Seitenwände (8) hohle Wandschlaufen (21) bilden.

5. Dachreling nach Anspruch 1, dadurch **gekennzeichnet**, daß das Stützteil (14) einen spitz zulaufenden Schnabel (15) aufweist, der in eine Verengung (16) am Übergang des Fußes (4) in den Holm (3) aufweist.

6. Dachreling nach Anspruch 5, dadurch **gekennzeichnet**, daß das Stützteil (14) mit einem Keilwinkel (19) zum Hohlraum (13) ausgerichtet ist, der bei der Befestigung des Stützteils (14) auf dem Fahrzeugdach (2) den Schnabel (15) in der Verengung (16) verspannt.

7. Dachreling nach einem der Ansprüche 1 bis 6, dadurch **gekennzeichnet**, daß die Dachreling (1) mit ein oder mehreren zusätzlichen Mittelstützen (6) am Fahrzeugdach (2) befestigbar ist, wobei die Mittelstützen (6) als separate Teile ausgebildet und mit dem Holm (4) durch Hammerkopfplatten (25) in der Bodenwölbung (20) verbunden sind.

8. Dachreling nach einem der Ansprüche 1 bis 7, dadurch **gekennzeichnet**, daß das Hohlkammerprofil (7) als Leichtmetallprofil, insbesondere als Strangpreßprofil aus Aluminium oder einer Aluminiumlegierung ausgebildet ist und einen rohrförmigen Querschnitt aufweist.

9. Dachreling nach einem der Ansprüche 1 bis 8, dadurch **gekennzeichnet**, daß das Hohlkammerprofil (7) eine Wandschwächung (27) für die Bodenwölbung (20) aufweist.

10. Dachreling nach einem der Ansprüche 1 bis 9 mit einer Vorrichtung zu ihrer lösbaren Befestigung auf der Fahrzeugoberfläche (2), dadurch **gekennzeichnet**, daß fahrzeugseitig je Relingfuß (4) ein über die Fahrzeugoberfläche (2) ragender Verbindungsbolzen (29) und im Relingfuß (4) eine passende Aufnahme (31) vorgesehen sind, wobei der Verbindungsbolzen (29) mindestens an seinem freien Ende konisch verjüngt (30) ausgebildet ist und die Aufnahme (31) eine passende konische Bohrung (32) aufweist und daß in der Mantelfläche des Verbindungsbolzens (29) eine Sackbohrung (36) vorgesehen ist, in welche ein im Relingfuß (4) radial zum Verbindungsbolzen (29) geführter Arretierstift (35) eingreift.

11. Dachreling nach Anspruch 10, dadurch **gekennzeichnet**, daß der Arretierstift (35) längs seiner Achse federnd (37) beweglich angeordnet ist.

12. Dachreling nach Anspruch 10 oder 11, dadurch **gekennzeichnet**, daß der Arretierstift (35) mittels eines Gewindestiftes (38) abgestützt ist, der in einer Gewindebohrung der Aufnahme (31) radial zum Verbindungsbolzen (29) verstellbar ist, wobei der Arretierstift (35) in einem hohlen Gewindestift (38) geführt und im Gewindestift (38) eine Feder (37) angeordnet ist.

13. Dachreling nach einem der Ansprüche 10 bis 12, dadurch **gekennzeichnet**, daß der Arretierstift (35) und die Sackbohrung (36) selbsthemmend konisch ausgebildet sind.

14. Dachreling nach einem der Ansprüche 10 bis 13, dadurch **gekennzeichnet**, daß der Gewindestift (38) von der hohlkehlenförmig ausgebildeten Innenseite (40) des Relingfußes (4) her mit einem Spezialwerkzeug durch eine kleine Bohrung (39) bzw. einen schmalen Spalt zugänglich ist.

15. Dachreling nach einem der Ansprüche 10 bis 14, dadurch **gekennzeichnet**, daß der Verbindungsbolzen (29) und die zugehörige Aufnahmebohrung (32) eine von der Vertikalen abweichende Schräglage aufweisen.

## Claims

1. A roof rail for vehicles, comprising a bar (3) which is constructed as a hollow-chamber profile (7) and has feet which adjoin said bar in one part, are bent at the ends and may be connected to the vehicle roof, the individual foot (4) being formed by a bent portion (11) of the bar (3) which is cut away obliquely at one side and has a downwardly open hollow space (13) in which there is a supporting part (14) which is adapted to the hollow space (13), characterized in that the hollow-chamber profile (7) has at the underside of its cross-section a curved base portion (20) running longitudinally and directed towards the interior.

2. A roof rail according to Claim 1, characterized in that the curved base portion (20) begins at the internal edge (24) of the foot and rises in the region of the foot (4) as far as the transition to the straight bar (3) and forms the narrowed portion (16).

3. A roof rail according to Claim 1 or 2, characterized in that the hollow-chamber profile (7) has side walls (8) which are shortened in the region of the curved base portion (20).

4. A roof rail according to one of Claims 1 to 3, characterized in that the curved base portion (20) and the side walls (8) form hollow wall loops (21).

5. A roof rail according to Claim 1, characterized in that the supporting part (14) has a beak-like portion (15) which tapers at an acute angle and has a narrowed portion (16) at the transition from the foot (4) to the bar (3).

6. A roof rail according to Claim 5, characterized in that the supporting part (14) is aligned at a wedge angle (19) with the hollow space (13) which braces the beak-like portion (15) in the narrowed portion (16) when the supporting part (14) is fastened to the vehicle roof (2).

7. A roof rail according to one of Claims 1 to 6, characterized in that the roof rail (1) may be fastened to the vehicle roof (2) by means of one or more additional central supporting pieces (6), the central supporting pieces (6) being constructed as separate parts and connected to the bar (4) by hammer-head plates (25) in the curved base portion (20).

8. A roof rail according to one of Claims 1 to 7, characterized in that the hollow-chamber profile (7) is constructed as a light metal profile, in particular as an extruded profile of aluminium or an aluminium alloy, and has a tubular cross-section.

9. A roof rail according to one of Claims 1 to 8, characterized in that the hollow-chamber profile (7) has a thinned wall portion (27) for the curved base portion (20).

10. A roof rail according to one of Claims 1 to 9, having a device for the detachable fastening thereof to the upper surface (2) of a vehicle, characterized in that there is provided on the vehicle side one connecting bolt (29), projecting above the upper surface (2) of the vehicle, for each railing foot (4) and there is provided in the railing foot (4) a fitting receiving part (31), the connecting bolt (29) being conically tapered (30) at least at its free end, and the receiving part (31) having a fitting conical bore (32), and in that there is provided in the outer surface of the connecting bolt (29) a blind hole (36) in which there engages a retention pin (35) guided radially with respect to the connecting bolt (29) in the rail foot (4).

11. A roof rail according to Claim 10, characterized in that the retention pin (35) is arranged such that it is resiliently (37) movable along its axis.

12. A roof rail according to Claim 10 or 11, characterized in that the retention pin (35) is supported by means of a threaded pin (38) which may be adjusted radially with respect to the connecting bolt (29) in a threaded bore in the receiving part (31), the retention pin (35) being guided in a hollow threaded pin (38), and a spring (37) being arranged in the threaded pin (38).

13. A roof rail according to one of Claims 10 to 12, characterized in that the retention pin (35) and the blind hole (36) are of a conical self-locking construction.

14. A roof rail according to one of Claims 10 to 13, characterized in that, using a special tool, the threaded pin (38) is accessible from the grooved inner side (40) of the rail foot (4) through a small bore (39) or a narrow gap.

15. A roof rail according to one of Claims 10 to 14, characterized in that the connecting bolt (29) and the associated receiving bore (32) have an oblique position deviating from the vertical.

## Revendications

1. Rambarde de toit de véhicules automobiles,constituée d'un longeron (3) qui est réalisé en forme de profilé (7) à évidement comportant des pieds qui sont coudés aux extrémités, qui font suite d'un seul tenant au longeron et qui peuvent être reliés au toit du véhicule automobile, dans lequel le pied (4) individuel est formé par une partie (11) flexible du longeron (3) qui est découpée en biais d'un côté et qui comporte un évidement (13) ouvert vers le bas dans lequel se met une pièce (14) de soutien qui est adaptée à l'évidement (13), caractérisée en ce que le profilé (7) à évidement comporte sur la face inférieure de sa section transversale une partie bombée (20) renfoncée dirigée vers l'intérieur et s'étendant longitudinalement.

2. Rambarde de toit suivant la revendication 1, caractérisée en ce que la partie bombée (20) renfoncée commence au bord (24) de pied se trouvant à l'intérieur et augmente dans la région du pied (4) jusqu'à l'endroit où elle devient le longeron (3) rectiligne et forme le rétrécissement (16).

3. Rambarde de toit suivant la revendication 1 ou 2, caractérisée en ce que le profilé (7) à évidement comporte des parois (8) latérales raccourcies dans la région de la partie bombée (20) renfoncée.

4. Rambarde de toit suivant l'une des revendications 1 à 3, caractérisée en ce que la partie bombée (20) renfoncée et les parois (8) latérales forment des crochets (21) creux de paroi.

5. Rambarde de toit suivant la revendication 1, caractérisée en ce que la pièce (14) de soutien comporte un bec (15) pointu qui comporte un rétrécissement (16) à l'endroit où le pied (4) devient le longeron (3).

6. Rambarde de toit suivant la revendication 7, caractérisée en ce que la pièce (14) de soutien est orienté en faisant un angle (19) d'attaque par rapport à l'évidement (13) qui, lors de la fixation de la pièce (14) d'appui au toit (2) du véhicule automobile, bloque le bec (15) dans le rétrécissement (16).

7. Rambarde de toit suivant l'une des revendications 1 à 6, caractérisée en ce que la rambarde (1) de toit peut être fixée au toit (2) du véhicule automobile par un ou plusieurs appuis (6) médians, les appuis (6) médians étant réalisés sous forme de pièces distinctes et reliés au longeron (4) par des plaques (25) en tête de marteau se trouvant dans la partie bombée (20) renfoncée.

8. Rambarde de toit suivant l'une des revendications 1 à 7, caractérisée en ce que le profilé (7) à évidement est réalisé sous forme de profilé en métal léger, notamment en profilé extrudé en aluminium ou en un alliage d'aluminium et a une section transversale tubulaire.

9. Rambarde de toit suivant l'une des revendications 1 à 8, caractérisée en ce que le profilé (7) à évidement comporte un amincissement (27) de paroi pour la partie bombée (20) renfoncée.

10. Rambarde de toit suivant l'une des revendications 1 à 9, comportant un dispositif servant à la fixer de manière amovible à la surface (2) du véhicule automobile, caractérisée en ce qu'il est prévu du côté du véhicule automobile, pour chaque pied (4) de rambarde, un axe (29) de liaison qui dépasse de la surface (2) du véhicule automobile et, dans le pied (4) de rambarde, un logement (31) correspondant, l'axe (29) de liaison étant réalisé de manière à diminuer de façon conique au moins à son extrémité libre et le logement (31) comportant un trou (32) conique correspondant, et en ce qu'il est prévu dans la surface latérale de l'axe (29) de liaison un trou (36) borgne dans lequel rentre une broche (35) de blocage qui, dans le pied (4) de la rambarde, est guidée radialement par rapport à l'axe (29) de liaison.

11. Rambarde de toit suivant la revendication 10, caractérisée en ce que la broche (35) de blocage est montée mobile élastiquement (37) le long de son axe.

12. Rambarde de toit suivant la revendication 10 ou 11, caractérisée en ce que la broche (35) de blocage est soutenue au moyen d'une broche (38) filetée qui peut être déplacée radialement par rapport à l'axe (29) de liaison dans un trou taraudé du logement (31), la broche (35) de blocage étant guidée dans une broche (38) filetée creuse et un ressort (37) étant monté dans la broche (38) filetée.

13. Rambarde de toit suivant l'une des revendications 10 à 12, caractérisée en ce que la broche (35) de blocage et le trou (36) borgne sont réalisés en cônes de manière à s'autobloquer.

14. Rambarde de toit suivant l'une des revendications 10 à 13, caractérisée en ce que la broche (38) filetée est accessible depuis la face (40) intérieure, réalisée en forme de gorge, du pied (4) de la rambarde par un outil spécial en passant par un petit trou (39) ou par un intervalle étroit.

15. Rambarde de toit suivant l'une des revendications 10 à 14, caractérisée en ce que l'axe (29) de liaison et le trou (32) de réception associé ont une position en biais qui s'écarte de la verticale.
